# EUROPEAN PATENT SPECIFICATION

(11) **EP 4 455 677 B1**
(45) Date of publication and mention of the grant of the patent: **22.07.2026**
(21) Application number: 23169881.2
(22) Date of filing: 25.04.2023
(51) Int. Cl.: G01N 35/00

(54) **ADJUSTABLE ADAPTER AND LABORATORY SYSTEM**
EINSTELLBARER ADAPTER UND LABORSYSTEM
ADAPTATEUR RÉGLABLE ET SYSTÈME DE LABORATOIRE

(43) Date of publication of application: 30.10.2024
(73) Proprietor: Roche Diagnostics GmbH, 68305 Mannheim (DE); F. Hoffmann-La Roche AG, 4070 Basel (CH)
(72) Inventor: Gutmann, Timo, 68305 Mannheim (DE); Meyer, Sascha, 71364 Winnenden (DE)
(74) Representative: Patentanwälte Ruff, Wilhelm, Beier, Dauster & Partner mbB

(56) References cited:
- CN-A- 101 158 534
- CN-A- 114 458 007
- US-A- 5 220 748
- US-A1- 2021 373 042

## Description

The invention relates to a use of an adjustable adapter for closing a c-shaped gap in between two modules of a laboratory system. Furthermore, the invention relates to such a laboratory system.

Typically, avoiding a gap in between two modules of a common laboratory system requires particular precise and exhaustive positioning of both the modules relative to one another.

US 2021/373042 A1 discloses an automated laboratory system comprising two modules and a connector to releasably connect the two modules of the automated laboratory system.

It is an object of the present invention to provide for a use of an adjustable adapter for closing a c-shaped gap in between two modules of a laboratory system, and to provide for such a laboratory system, enabling simplification of positioning of the two modules relative to one another.

This object is solved by the subject-matter of the independent claims, respectively. Preferred embodiments are subject-matter of the dependent claims.

The adjustable adapter used according to the invention is adapted for closing a c-shaped gap in between two modules of a laboratory system according to the invention. The laboratory system may be a laboratory sample distribution system. The adjustable adapter comprises a base. The base extends along a width direction of the adjustable adapter. The adjustable adapter has a pair of legs. Each of the legs protrudes from the base in a length direction of the adjustable adapter so that the base and the legs are arranged in a c-shape of the adjustable adapter. The base and the legs together can form the c-shape of the adjustable adapter. Therein, the base is adjustable to set its dimension along the length direction. Thus, inaccuracies in the positioning of the two modules relative to one another can be at least partially compensated regarding the length direction by accordingly adjusting the base. This can ensure that the c-shaped gap is closed even if the relative positioning of the two modules along the length direction has particularly high tolerances. Since the adjustable adapter enables to reliably close the c-shaped gap even at particularly high positioning tolerances, positioning of the modules relative to one another can be simplified.

In particular, the c-shaped gap in between the two modules is to be closed as to avoid objects processed and/or transported by the laboratory system from falling into and/or through the c-shaped gap. Such an object may be a laboratory sample container. The c-shaped gap can extend in a horizontal plane containing respective inner surfaces of both the modules, said inner surfaces to be connected at least substantially flush or evenly by the adjustable adapter. The width direction may be perpendicular to the length direction. The width direction and the length direction may span the horizontal plane. The width direction and the length direction may be perpendicular to gravity.

According to an embodiment of the invention, the base has two end portions. The end portions are located or arranged opposite one another along the width direction. Therein, each of the legs protrudes from the base at a respective end portion. Thus, the base and both the legs can partially enclose a tongue-shaped portion of one of the modules. The tongue-shaped portion may protrude into an interior of the other module of the laboratory system along the length direction. The other module may have a recess for accepting or receiving the tongue-shaped protrusion with a clearance, the clearance providing for the c-shaped gap.

According to another embodiment of the invention, the base has a first unit and a second unit. Therein, the first unit overlaps the second unit with respect to the length direction. With respect to gravity, the first unit may be located of arranged above the second unit. The first unit comprises both the end portions of the base. Therein, the legs are each fixed at or to a respective end portion. A position of the second unit is adjustable relative to the first unit along the length direction in order to set the dimension of the base along the length direction. The first unit and the second unit can form a telescopic mechanism of the base.

According to another embodiment of the invention, the second unit is guided at the legs along the length direction. Alternatively, or additionally, the second unit is guided at the first unit along the length direction. In particular, the second unit is guided in a drawer-like manner. This allows for particularly easy adjustment of the base.

According to another embodiment of the invention, the adjustable adapter has at least one linear guide for guiding the second unit relative to the first unit along the length direction. Additionally, or alternatively, the second unit is guided in between a first end position of the second unit and a second end position of the second unit, in both cases relative to the first unit. In particular, the second unit is guided steplessly in between both its end positions. A distance between the end positions may correspond to the tolerances to be compensated by adjusting the adjustable adapter.

According to another embodiment of the invention, the first unit has a lamella arranged in between a body of the first unit and the second unit. Therein, the lamella is guided at the body along the length direction. Additionally, or alternatively, the lamella is guided at the second unit along the length direction. The lamella allows for a particularly great variation in the distance between the end positions of the second unit, thus enabling compensation of particular high positioning tolerances. The lamella may form an intermediate segment of the telescopic mechanism of the adjustable adapter.

According to another embodiment of the invention, the adjustable adapter has at least one fastener. The fastener is adapted for releasable fixation of a present adjustment or setting of the base. In particular, the fastener comprises a clamping screw. The fastener can be a quick-fastener.

According to another embodiment of the invention, the base has at least one through-slot extending along the width direction. Alternatively, or additionally, at least one of the legs, in particular each of the legs, has at least one through-slot extending along the width direction. At least one of the legs, in particular each of the legs, can have an overhang outwardly projecting along the width direction, in particular horizontally, said overhang comprising the through-slot. By such a through-slot, compensation of positioning tolerances along the width direction can be enabled, said positioning tolerances along the width direction being due to a tolerated lateral misalignment.

As implicated above, the laboratory system according to the invention comprises two modules. Furthermore, the laboratory system has an adjustable adapter according to the invention as described above. Thus, the afore-described advantages of the adjustable adapter according to the invention transfer to the laboratory system according to the invention. In between the modules of the laboratory system, a c-shaped gap is present. The c-shaped gap is closed by the adjustable adapter, in particular at least partially. Therein, the base of the adjustable adapter is adjusted so that the dimension of the base along the length direction is set in correspondence to the c-shaped gap. In particular, the base of the adjustable adapter is adjusted so that it completely fills or covers a corresponding portion of the c-shaped gap along the length direction. The adjustable adapter of the laboratory system can allow for preventing objects from falling into or through the c-shaped gap. Such an object may be a sample container to be handled and/or transported by the laboratory system. In particular, the laboratory system is a laboratory sample distribution system. The two modules of the laboratory system can have a respective inner surface. Therein, the inner surfaces of the modules can be connected with one another by the adjustable adapter, in particular substantially evenly or flush. In particular, the inner surfaces can be of substantially horizontal orientation.

According to an embodiment of the invention, a first of the modules of the laboratory system is a transport module of the laboratory system. The inner surface of the transport module can be a transport surface on which sample container carriers of the laboratory system can be driven, in particular by electromagnetic interaction. The sample container carriers can be adapted for carrying sample containers. A second of the modules of the laboratory system is a sorter module of the laboratory system. The sorter module can have a handling device, for example comprising a controllable gripper for gripping sample containers. The transport module is adapted for delivering sample containers to the sorter module. The handling device may be configured to part sample containers from sample container carriers provided by the transport module and to pass the sample containers on. The sorter module is adapted to sort delivered samples. In particular, the sorter module is adapted to sort delivered sample containers by selectively passing delivered sample containers on to further modules of the laboratory system.

In particular, the adjustable adapter according to the invention is used in the laboratory sample system to cover the c-shaped gap in between the modules of the laboratory system.

Further advantages and features of the invention arise from the claims as well as from the following description of a preferred embodiment of the invention, which is depicted by the drawings. Therein, equal reference signs relate to equal or similar or functionally equal components.

It is to be understood that the features mentioned above as well as the features described below are not only usable in the stated combination, respectively, but also in other combinations or solely, without leaving the frame of the present invention.
- Fig. 1: schematically depicts, in a perspective view, an embodiment of a laboratory system according to the invention, the laboratory system having an embodiment of an adjustable adapter for a use according to the invention,
- fig. 2: illustrates, in a top view, a detail of the laboratory system according to fig. 1,
- fig. 3: illustrates, in a top view, a detail of the laboratory system according to figs. 1 and 2, wherein the adjustable adapter is blanked out,
- fig. 4: illustrates, in a perspective view, a detail of the laboratory system according to figs. 1 to 3,
- fig. 5: separately illustrates, in a perspective view, the adjustable adapter of the laboratory system according to figs. 1 to 4, wherein a base of the adjustable adapter is adjusted so that the base is set to its max. dimension along the length direction,
- fig. 6: depicts the adjustable adapter of fig. 5 in a similar view, wherein the base is adjusted so that it is set to its min. dimension along the length direction, and
- fig. 7: illustrates, in another perspective view, the adjustable adapter according to figs. 5 and 6.

A laboratory system 20 has two modules 23. Both the modules 23 can be arranged in line. The modules 23 can be adapted for distribution of laboratory sample containers. Thus, the laboratory system 20 can be a laboratory sample distribution system. Laboratory sample containers may be embodied as laboratory sample tubes having a circular cross-section. The laboratory sample containers can store a respective sample. The sample may be a liquid sample, e. g. a blood sample.

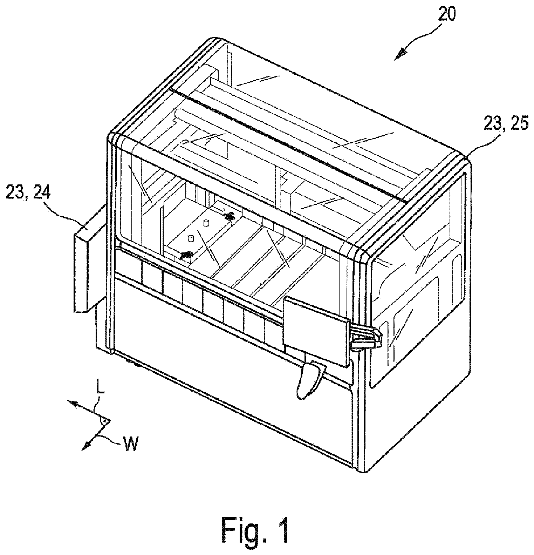

In the example of figs. 1 to 4, a first of the modules 23 is a transport module 24 of the laboratory system 20. For example, the transport module 24 has an inner surface 22 which comprises a transport surface. The transport surface of the transport module 24 can comprise an electromagnetic device for electro-magnetically driving sample container carriers of the laboratory system 20 on top of the transport surface. Such sample container carriers can be adapted for carrying laboratory sample containers. A second of the modules 23 is a sorter module 25 of the laboratory system 20. The sorter module 25 can have an inner surface 22. The transport module 24 is adapted for delivering sample containers to the sorter module 25. The sorter module 25 is adapted to sort delivered sample containers. For example, the sorter module 25 can sort delivered sample containers by selectively passing the sample containers on to further modules of the laboratory system 20. The further modules may be adapted to process and/or analyze a respective sample stored in a passed-on sample container.

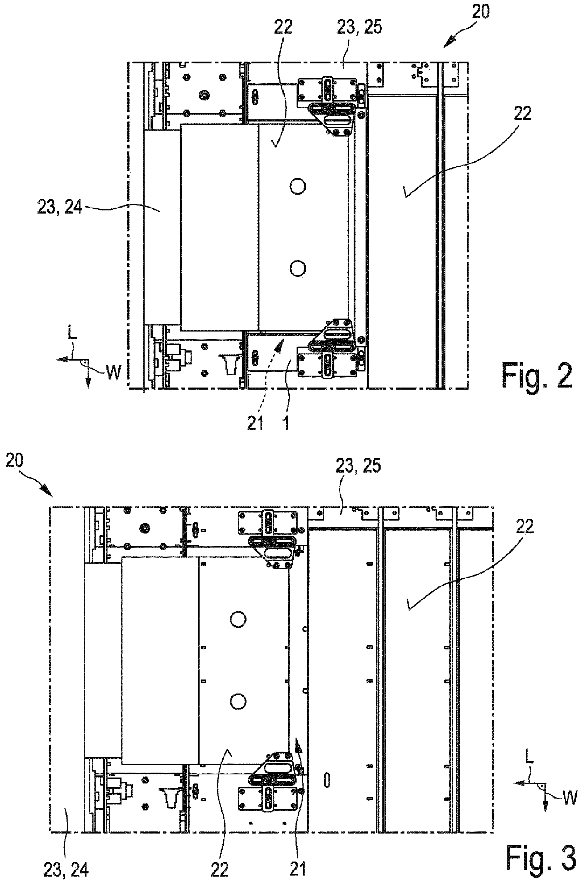

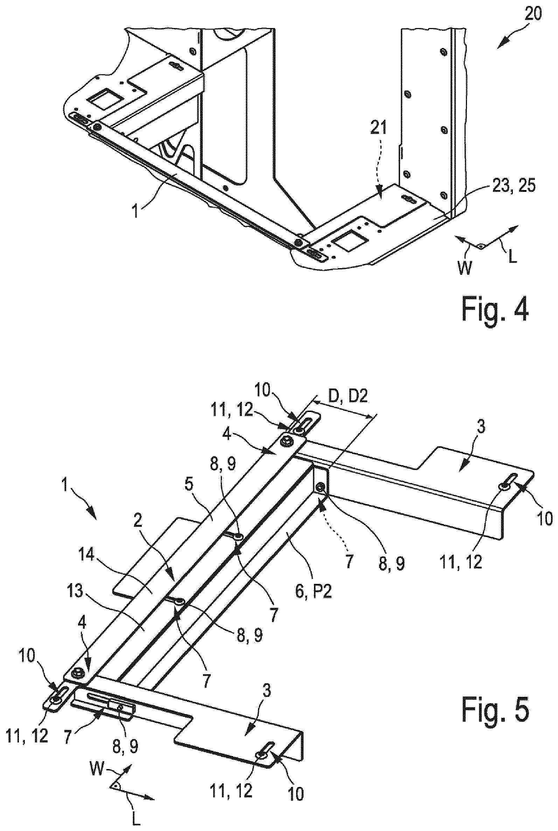

The laboratory system 20 comprises an adjustable adapter 1 as separately depicted in figs. 5 to 7. Therein, in between the modules 23 a c-shaped gap 21 is present, as best to be seen in fig. 3. The c-shaped gap 21 in between the modules 23 is at least partially closed by the adjustable adapter 1. For example, the c-shaped gap 21 is closed by the adjustable adapter 1 so that sample containers can be prevented from falling through the c-shaped gap 21. According to the figs., the adjustable adapter 1 is used in the laboratory system 20 to cover or close the c-shaped gap 21 in between the modules 23.

The adjustable adapter 1 has a base 2. The base 2 extends along a width direction W of the adjustable adapter 1. The adjustable adapter 1 has a pair of legs 3. Each leg 3 protrudes from the base 2 in a length direction L of the adjustable adapter 1 so that the base 2 and the legs 3 are arranged in a c-shape of the adjustable adapter 1. The base 2 is adjustable to set its dimension D along the length direction L. In the laboratory system 20 according to figs. 1 to 4, the base 2 of the adjustable adapter 1 is adjusted so that the dimension D of the base 2 along the length direction L is set in correspondence to a base portion of to the c-shaped gap 21. Thus, the base 2 of the adjustable adapter 1 is adjusted so that tolerances of a distance in between both the modules 23 is compensated.

For example, the base 2 has two end portions 4 which are arranged opposite one another along the width direction W. Therein, each leg 3 protrudes from the base 2 at a respective end portion 4. The legs 3 may be substantially in parallel. The legs 3 may be mirror symmetric. The length direction L may be perpendicular to the width direction W. The width direction W and the length direction L may span a horizontal plane. The horizontal plane can be perpendicular to gravity. The horizontal plane may contain or be parallel to the c-shaped gap 21 and/or the inner surfaces 22 and/or the c-shape of the adjustable adapter 1. The inner surfaces 22 of the modules 23 can be connected with one another at least substantially flush or evenly by the adjustable adapter 1.

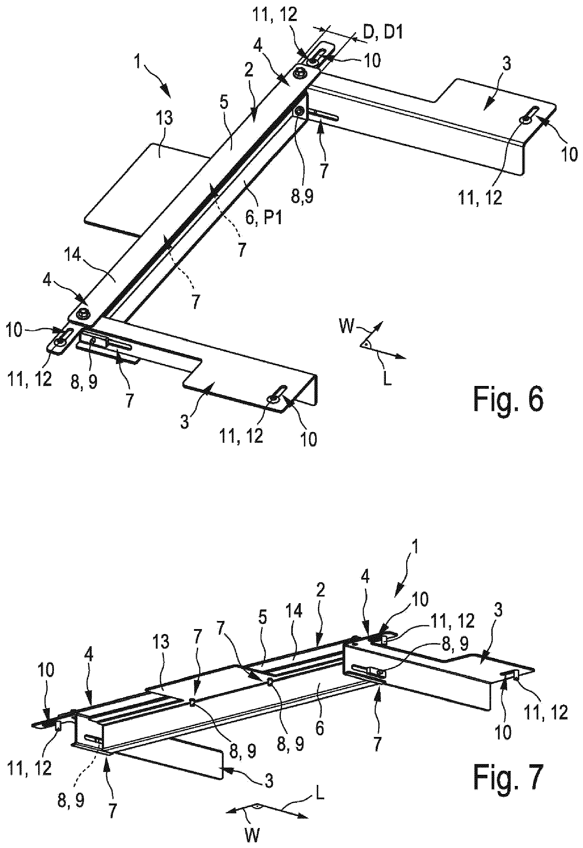

For example, the base 2 comprises a first unit 5 and a second unit 4, as best to be seen in figs. 5 to 7. Therein, the first unit 5 overlaps the second unit 6 with respect to the length direction L. The first unit 5 has both the end portions 4. Therein, the legs 3 are fixed to the first unit 5 at a respective end portion 4. A position of the second unit 6 is adjustable relative to the first unit 5 along the length direction L. By adjusting the position of the second unit 6 relative to the first unit 5, the dimension D of the base 2 can be set with respect to the length direction L. In fig. 5 the base 2 is adjusted so that the base 2 has its maximal dimension D2 along the length direction L. Contrarily to fig. 5, according to fig. 6, the base 2 is adjusted so that it has its minimal dimension D1 along the length direction L.

In the embodiment shown in the figures, the second unit 6 is guided at the legs 3 along the length direction L. Alternatively, or additionally, the second unit 6 can be guided at the first unit 5 along the length direction L. For example, the second unit 6 is guided in a drawer-like manner.

For example, the adjustable adapter 1 has at least one linear guide 7 for guiding the second unit 6 relative to the first unit 5 along the length direction L. The linear guide 7 can comprise a slot extending along the length direction L and a sliding element movably accepted or received in the slot. For example, the second unit 6 is guided in between a first end position P1 of the second unit 6 and a second end position P2 of the second unit 6 relative to the first unit 5. In fig. 5, the second unit 6 is in its second end position P2. On the contrary, in fig. 6, the second unit 6 is in its first end position P1. When the second unit 6 is in its first end position P1, the base 2 can have its min. dimension D1 along the length direction L. When the second unit 6 is in its second end position P2, the base 2 can have its max. dimension D2 along the length direction L.

According to the embodiment shown in the figures, the first unit 5 comprises a lamella 13. The lamella 13 is arranged in between a body 14 of the first unit 5 and the second unit 6. For example, the lamella 13 is arranged in between the body 14 and the second unit 6 with respect to gravity. The lamella 13 is guided at the body 14 and/or at the second unit 6 along the length direction L. The lamella 13 may allow for enlarging a distance in between the first end position P1 and the second end position P2 of the second unit 6.

For example, the adjustable adapter 1 has at least one fastener 8. The fastener 8 is adapted for releasable fixation of a present adjustment or setting of the base 2. As to be seen from the figures, the fastener 8 can comprise a clamping screw 9.

For example, the base 2 has a through-slot 10 extending along a width direction W. In addition, or as an alternative, at least one of the legs 3 - in the example of the figs. each of the legs 3 - has a through-slot 10 extending along the width direction W. Therein, the through-slot 10 is adapted to receive or accept a fastening element 11. The fastening element 11 can be a threaded bolt 12. The fastening element 11, for example, is adapted for fastening the adjustable adapter 1 to at least one of the modules 23. Therein, the through-slot 10 allows for compensation of tolerances regarding the positioning of the modules 23 relative to one another with respect to the width direction W. The through-slots 10 can allow for compensation of a lateral offset or misalignment of the two modules 23 relative to one another. The adjustable adapter 1 may allow for compensation of at least minor angular misalignment of the modules 23.

The second unit 6 may be made from sheet metal. The first unit 5 may be made from sheet metal. The body 14 may be made from sheet metal. The lamella 13 may be made from sheet metal. The lamella 13 may be substantially flat. The second unit 6 may have an S-shaped cross-section, the cross section being oriented perpendicular to the width direction W. The lamella 13 can have a protrusion. At least at the protrusion, an extension of the lamella 13 along the length direction L can be greater than an extension of the body 14 and/or of the second unit 6 along the length direction L.

An initial installation of the laboratory system 20 can be carried out as follows. At first, the transport module 24 can be positioned on a laboratory floor and aligned so that its transport surface extends horizontally. Then, the sorter module 25 can be positioned relative to the transport module 24 by moving the sorter module 25 towards the transport module 24. The sorter module 25 may have wheels rolling on the laboratory floor. The sorter module 25 may be moved towards the transport module 24 until a tongue-shaped protrusion of the transport module 24 reaches into an interior of the sorter module 25. As soon as the sorter module 25 has a position relative to the transport module 24 within a predetermined tolerance, the position of the sorter module 25 relative to the transport module 24 can be fixated or figuratively frozen.

For fixation of the sorter module 25 relative to the transport module 24, non-slip feet of the sorter module 25 can be extended downwards, in particular by a screw or lever mechanism or alike, until the feet get in contact with the laboratory floor. The sorter module 25 can be jacked up by extending the feet. Alternatively, wheels of the sorter module 25 can be retracted. By extending the feet individually, the sorter module 25 then can be aligned horizontally. Due to unevenness of the laboratory floor, the c-shaped gap 21 in between the transport module 24 and the sorter module 25 can be due to tolerances with respect to both the width direction W and the length direction L. The adjustable adapter 1 can be adapted to compensate for those tolerances. The adjustable adapter 1 may allow for compensation of at least minor angular misalignment of the modules 23.

The adjustable adapter 1 can allow for closing the c-shaped gap 21 along the length direction L as well as along the width direction W, in particular so that sample containers can be prevented from falling through the c-shaped gap 21 in case of a malfunction of the transport system 20. With respect to the width direction W, tolerances of the c-shaped gap 21 can be compensated by the legs 3 using the through-slots 10. A distance in between the legs 3 along the width direction W can be constant or non-adjustable. Thus, the distance in between the legs 3 can correspond to a width of the transport module 24, in particular of the tongue-shaped protrusion of the transport module 24 reaching into the interior of the sorter module 25.

After the legs 3 of the adjustable adapter 1 are fastened to the sorter module 25, the second unit 6 can be moved towards the transport module 24. Then, the second unit 6 can be fastened to the legs 3 by the fasteners 8. Then, the lamella 13 may be moved away from the transport module 24 until the c-shaped gap 21, in particular the base portion of the c-shaped gap 21, in between the sorter module 25 and the transport module 24 is closed. Therein, the lamella 13 may cover a portion of the gap 21. The body 14 can be rigidly connected to the legs 3. A frame of the sorter module 25 can have a gap or slot which ensures that the adjustable adapter 1, in particular the lamella 13 and/or the second unit 6, stays in horizontal orientation. The gap of the frame may be adapted to guide the protrusion of the lamella 13.

## Claims

1. Laboratory system (20) comprising
- two modules (23), and
- an adjustable adapter (1) for closing a c-shaped gap (21) in between the two modules (23) of the laboratory system (20), the adjustable adapter (1) comprising
- a base (2) extending along a width direction (W) of the adjustable adapter (1), and
- a pair of legs (3) each protruding from the base (2) in a length direction (L) of the adjustable adapter (1) so that the base (2) and the legs (3) are arranged in a c-shape of the adjustable adapter (1),
- the base (2) being adjustable to set its dimension (D, D1, D2) along the length direction (L),
- wherein the c-shaped gap (21) in between the modules (23) is closed by the adjustable adapter (1),
- wherein the base (2) of the adjustable adapter (1) is adjusted so that the dimension (D, D1, D2) of the base (2) along the length direction (L) is set in correspondence to the c-shaped gap (21).

2. Laboratory system (20) according to claim 1, **characterized in that**
- the base (2) has two end portions (4) arranged opposite one another along the width direction (W),
- each leg (3) protruding from the base (2) at a respective end portion (4).

3. Laboratory system (20) according to any of the preceding claims, **characterized in that**
- the base (2) comprises a first unit (5) and a second unit (6), the first unit (5) overlapping the second unit (6) with respect to the length direction (L),
- the first unit (5) having both the end portions (4) and the legs (3) being fixed thereat, respectively,
- a position of the second unit (6) being adjustable relative to the first unit (5) along the length direction (L) as to set the dimension (D, D1, D2) of the base (2) along the length direction (L).

4. Laboratory system (20) according to claim 3, **characterized in that**
- the second unit (6) is guided at the legs (3) and/or at the first unit (5) along the length direction (L),
- in particular the second unit (6) being guided in a drawer-like manner.

5. Laboratory system (20) according to claim 3 or 4, **characterized in that**
- the adjustable adapter (1) has at least one linear guide (7) for guiding the second unit (6) relative to the first unit (5) along the length direction (L), and/or
- the second unit (6) being guided, in particular steplessly, in between a first end position (P1) of the second unit (6) and a second end position (P2) of the second unit (6) relative to the first unit (5).

6. Laboratory system (20) according to any of claims 3 to 5, **characterized in that**
- the first unit (5) has a lamella (13) arranged in between a body (14) of the first unit (5) and the second unit (6),
- the lamella (13) being guided at the body (14) and/or at the second unit (6) along the length direction (L).

7. Laboratory system (20) according to any of the preceding claims, **characterized in that**
- the adjustable adapter (1) has at least one fastener (8) for releasable fixation of a present adjustment of the base (2),
- in particular the fastener (8) comprising a clamping screw (9).

8. Laboratory system (20) according to any of the preceding claims, **characterized in that**
- the base (2) and/or at least one of the legs (3) has a through-slot (10) extending along the width direction (W),
- the through-slot (10) being adapted to receive a fastening element (11), in particular a threaded bolt (12), for fastening the adjustable adapter (1) to at least one of the modules (23).

9. Laboratory system (20) according to any of the preceding claims, **characterized in that**
- a first of the modules (23) is a transport module (24) of the laboratory system (20), and
- a second of the modules (23) is a sorter module (25) of the laboratory system (20),
- the transport module (24) being adapted for delivering sample containers to the sorter module (25),
- the sorter module (25) being adapted to sort delivered sample containers, in particular by selectively passing delivered sample containers on to further modules of the laboratory system (20).

10. Use of an adjustable adapter (1) for closing the c-shaped gap (21) in between two modules (23) of a laboratory system (20), the adjustable adapter (1) comprising
- a base (2) extending along a width direction (W) of the adjustable adapter (1), and
- a pair of legs (3) each protruding from the base (2) in a length direction (L) of the adjustable adapter (1) so that the base (2) and the legs (3) are arranged in a c-shape of the adjustable adapter (1),
- the base (2) being adjustable to set its dimension (D, D1, D2) along the length direction (L),
- wherein the c-shaped gap (21) in between the modules (23) is closed by the adjustable adapter (1),
- wherein the base (2) of the adjustable adapter (1) is adjusted so that the dimension (D, D1, D2) of the base (2) along the length direction (L) is set in correspondence to the c-shaped gap (21).

## Patentansprüche

1. Laborsystem (20), umfassend:
- zwei Module (23) und
- einen einstellbaren Adapter (1) zum Schließen eines c-förmigen Spalts (21) zwischen den zwei Modulen (23) des Laborsystems (20), wobei der einstellbare Adapter (1) Folgendes umfasst:
- eine Basis (2), die sich entlang einer Breitenrichtung (W) des einstellbaren Adapters (1) erstreckt, und
- ein Paar Schenkel (3), die jeweils in Längenrichtung (L) des einstellbaren Adapters (1) aus der Basis (2) herausragen, sodass die Basis (2) und die Schenkel (3) eine C-Form des einstellbaren Adapters (1) bilden,
- wobei die Basis (2) einstellbar ist, um ihre Abmessung (D, D1, D2) entlang der Längenrichtung (L) festzulegen,
- wobei der c-förmige Spalt (21) zwischen den Modulen (23) durch den einstellbaren Adapter (1) geschlossen wird,
- wobei die Basis (2) des einstellbaren Adapters (1) so eingestellt wird, dass die Abmessung (D, D1, D2) der Basis (2) entlang der Längenrichtung (L) entsprechend dem c-förmigen Spalt (21) festgelegt wird.

2. Laborsystem (20) nach Anspruch 1, **dadurch gekennzeichnet, dass**
- die Basis (2) zwei Endabschnitte (4) aufweist, die entlang der Breitenrichtung (W) einander gegenüberliegend angeordnet sind,
- wobei jeder Schenkel (3) an einem jeweiligen Endabschnitt (4) aus der Basis (2) herausragt.

3. Laborsystem (20) nach einem der vorhergehenden Ansprüche, **dadurch gekennzeichnet, dass**
- die Basis (2) eine erste Einheit (5) und eine zweite Einheit (6) umfasst, wobei die erste Einheit (5) die zweite Einheit (6) in Bezug auf die Längenrichtung (L) überlappt,
- wobei an der ersten Einheit (5) sowohl die Endabschnitte (4) als auch die Schenkel (3) befestigt sind,
- wobei eine Position der zweiten Einheit (6) relativ zur ersten Einheit (5) entlang der Längenrichtung (L) einstellbar ist, um die Abmessung (D, D1, D2) der Basis (2) entlang der Längenrichtung (L) festzulegen.

4. Laborsystem (20) nach Anspruch 3, **dadurch gekennzeichnet, dass**
- die zweite Einheit (6) an den Schenkeln (3) und/oder an der ersten Einheit (5) entlang der Längenrichtung (L) geführt ist,
- wobei insbesondere die zweite Einheit (6) schubladenartig geführt ist.

5. Laborsystem (20) nach Anspruch 3 oder 4, **dadurch gekennzeichnet, dass**
- der verstellbare Adapter (1) mindestens eine Linearführung (7) zum Führen der zweiten Einheit (6) relativ zur ersten Einheit (5) entlang der Längenrichtung (L) aufweist und/oder
- wobei die zweite Einheit (6), insbesondere stufenlos, zwischen einer ersten Endposition (P1) der zweiten Einheit (6) und einer zweiten Endposition (P2) der zweiten Einheit (6) relativ zur ersten Einheit (5) geführt ist.

6. Laborsystem (20) nach einem der Ansprüche 3 bis 5, **dadurch gekennzeichnet, dass**
- die erste Einheit (5) eine Lamelle (13) aufweist, die zwischen einem Körper (14) der ersten Einheit (5) und der zweiten Einheit (6) angeordnet ist,
- wobei die Lamelle (13) am Körper (14) und/oder an der zweiten Einheit (6) entlang der Längenrichtung (L) geführt ist.

7. Laborsystem (20) nach einem der vorhergehenden Ansprüche, **dadurch gekennzeichnet, dass**
- der einstellbare Adapter (1) mindestens einen Befestiger (8) zur lösbaren Fixierung einer aktuellen Einstellung der Basis (2) aufweist,
- insbesondere wobei das Befestigungselement (8) eine Klemmschraube (9) umfasst.

8. Laborsystem (20) nach einem der vorhergehenden Ansprüche, **dadurch gekennzeichnet, dass**
- die Basis (2) und/oder mindestens einer der Schenkel (3) einen Durchgangsschlitz (10) aufweist, der sich entlang der Breitenrichtung (W) erstreckt,
- wobei der Durchgangsschlitz (10) zur Aufnahme eines Befestigungselements (11), insbesondere eines Gewindebolzens (12), zur Befestigung des einstellbaren Adapters (1) an mindestens einem der Module (23) eingerichtet ist.

9. Laborsystem (20) nach einem der vorhergehenden Ansprüche, **dadurch gekennzeichnet, dass**
- ein erstes der Module (23) ein Transportmodul (24) des Laborsystems (20) ist und
- ein zweites der Module (23) ein Sortiermodul (25) des Laborsystems (20) ist,
- wobei das Transportmodul (24) zur Abgabe von Probenbehältern an das Sortiermodul (25) eingerichtet ist,
- wobei das Sortiermodul (25) zur Sortierung abgegebener Probenbehälter eingerichtet ist, insbesondere durch selektives Weiterleiten abgegebener Probenbehälter an weitere Module des Laborsystems (20).

10. Verwendung eines einstellbaren Adapters (1) zum Schließen des c-förmigen Spalts (21) zwischen zwei Modulen (23) eines Laborsystems (20), wobei der einstellbare Adapter (1) Folgendes umfasst:
- eine Basis (2), die sich entlang einer Breitenrichtung (W) des einstellbaren Adapters (1) erstreckt, und
- ein Paar Schenkel (3), die jeweils in Längenrichtung (L) des einstellbaren Adapters (1) aus der Basis (2) herausragen, sodass die Basis (2) und die Schenkel (3) eine C-Form des einstellbaren Adapters (1) bilden,
- wobei die Basis (2) einstellbar ist, um ihre Abmessung (D, D1, D2) entlang der Längenrichtung (L) festzulegen,
- wobei der c-förmige Spalt (21) zwischen den Modulen (23) durch den einstellbaren Adapter (1) geschlossen wird,
- wobei die Basis (2) des einstellbaren Adapters (1) so eingestellt wird, dass die Abmessung (D, D1, D2) der Basis (2) entlang der Längenrichtung (L) entsprechend dem c-förmigen Spalt (21) festgelegt wird.

## Revendications

1. Système de laboratoire (20) comprenant
- deux modules (23), et
- un adaptateur réglable (1) pour fermer un interstice en forme de C (21) entre les deux modules (23) du système de laboratoire (20), l'adaptateur réglable (1) comprenant
- une base (2) s'étendant le long d'une direction de largeur (W) de l'adaptateur réglable (1), et
- une paire de branches (3) faisant chacune saillie depuis la base (2) dans une direction de longueur (L) de l'adaptateur réglable (1) de sorte que la base (2) et les pattes (3) sont agencées en une forme de C de l'adaptateur réglable (1),
- la base (2) étant réglable pour définir sa dimension (D, D1, D2) le long de la direction de longueur (L),
- dans lequel l'interstice en forme de C (21) entre les modules (23) est fermé par l'adaptateur réglable (1),
- dans lequel la base (2) de l'adaptateur réglable (1) est réglée de sorte que la dimension (D, D1, D2) de la base (2) le long de la direction de longueur (L) est définie en correspondance avec l'interstice en forme de C (21).

2. Système de laboratoire (20) selon la revendication 1, **caractérisé en ce que**
- la base (2) a deux parties d'extrémité (4) agencées de manière opposée l'une à l'autre le long de la direction de largeur (W),
- chaque patte (3) faisant saillie depuis la base (2) au niveau d'une partie d'extrémité (4) respective.

3. Système de laboratoire (20) selon l'une quelconque des revendications précédentes, **caractérisé en ce que**
- la base (2) comprend une première unité (5) et une seconde unité (6), la première unité (5) se superposant à la seconde unité (6) par rapport à la direction de longueur (L),
- la première unité (5) ayant à la fois les parties d'extrémité (4) et les pattes (3) fixées à celle-ci, respectivement,
- une position de la seconde unité (6) étant réglable par rapport à la première unité (5) le long de la direction de longueur (L) de manière à définir la dimension (D, D1, D2) de la base (2) le long de la direction de longueur (L).

4. Système de laboratoire (20) selon la revendication 3, **caractérisé en ce que**
- la seconde unité (6) est guidée au niveau des pattes (3) et/ou au niveau de la première unité (5) le long de la direction de longueur (L),
- en particulier la seconde unité (6) étant guidée d'une manière semblable à un tiroir.

5. Système de laboratoire (20) selon la revendication 3 ou 4, **caractérisé en ce que**
- l'adaptateur réglable (1) a au moins un guide linéaire (7) pour guider la seconde unité (6) par rapport à la première unité (5) le long de la direction de longueur (L), et/ou
- la seconde unité (6) étant guidée, en particulier de manière continue, entre une première position d'extrémité (P1) de la seconde unité (6) et une seconde position d'extrémité (P2) de la seconde unité (6) par rapport à la première unité (5).

6. Système de laboratoire (20) selon l'une quelconque des revendications 3 à 5, **caractérisé en ce que**
- la première unité (5) a une lamelle (13) agencée entre un corps (14) de la première unité (5) et la seconde unité (6),
- la lamelle (13) étant guidée au niveau du corps (14) et/ou au niveau de la seconde unité (6) le long de la direction de longueur (L).

7. Système de laboratoire (20) selon l'une quelconque des revendications précédentes, **caractérisé en ce que**
- l'adaptateur réglable (1) a au moins un dispositif de fixation (8) pour une fixation libérable d'un réglage actuel de la base (2),
- en particulier le dispositif de fixation (8) comprenant une vis de serrage (9).

8. Système de laboratoire (20) selon l'une quelconque des revendications précédentes, **caractérisé en ce que**
- la base (2) et/ou au moins l'une des pattes (3) a une fente traversante (10) s'étendant le long de la direction de largeur (W),
- la fente traversante (10) étant adaptée pour recevoir un élément de fixation (11), en particulier un boulon fileté (12), pour fixer l'adaptateur réglable (1) à au moins un des modules (23).

9. Système de laboratoire (20) selon l'une quelconque des revendications précédentes, **caractérisé en ce que**
- un premier des modules (23) est un module de transport (24) du système de laboratoire (20), et
- un second des modules (23) est un module de tri (25) du système de laboratoire (20),
- le module de transport (24) étant adapté pour distribuer des récipients d'échantillon au module de tri (25),
- le module de tri (25) étant adapté pour trier les récipients d'échantillon distribués, en particulier en transmettant sélectivement les récipients d'échantillon distribués à d'autres modules du système de laboratoire (20).

10. Utilisation d'un adaptateur réglable (1) pour fermer l'interstice en forme de C (21) entre deux modules (23) d'un système de laboratoire (20), l'adaptateur réglable (1) comprenant
- une base (2) s'étendant le long d'une direction de largeur (W) de l'adaptateur réglable (1), et
- une paire de branches (3) faisant chacune saillie depuis la base (2) dans une direction de longueur (L) de l'adaptateur réglable (1) de sorte que la base (2) et les pattes (3) sont agencées en une forme de C de l'adaptateur réglable (1),
- la base (2) étant réglable pour définir sa dimension (D, D1, D2) le long de la direction de longueur (L),
- dans lequel l'interstice en forme de C (21) entre les modules (23) est fermé par l'adaptateur réglable (1),
- dans lequel la base (2) de l'adaptateur réglable (1) est réglée de sorte que la dimension (D, D1, D2) de la base (2) le long de la direction de longueur (L) est définie en correspondance avec l'interstice en forme de C (21).
